Europäisches Patentamt

European Patent Office

Office européen des brevets

(19)

(11) Publication number: **0 083 000**

**A2**

# EUROPEAN PATENT APPLICATION

(21) Application number: 82111422.0

(22) Date of filing: 09.12.82

(51) Int. Cl.³: **G 01 L 19/08**

(30) Priority: 26.12.81 JP 214978/81

(43) Date of publication of application:
06.07.83 Bulletin 83/27

(84) Designated Contracting States:
DE FR GB IT SE

(71) Applicant: Kodo, Keiun
1-9, 4-chome Sakuragaoka
Minoo Osaka 562(JP)

(72) Inventor: Kodo, Keiun
1-9, 4-chome Sakuragaoka
Minoo Osaka 562(JP)

(74) Representative: Goddar, Heinz, Dr. et al,
FORRESTER & BOEHMERT Widenmayerstrasse 4/1
D-8000 München 22(DE)

(54) Device for indicating the driving operation of the internal combustion engine of a motor vehicle.

(57) A device for indicating the driving operation of an internal combustion engine in a motor vehicle is disclosed. The pressure variation within an air inlet duct of the engine is sensed or detected by pressure detecting means, which cause output means to produce in response to the degree of the pressure within the duct an output which in turn operates to turn on at least one of the indicator lights of different colors. These indicator lights are arranged in series on an indicator board so as to be turned on in decreasing order in the pressure level within the duct. The indicator board is adapted to be disposed on the dash pannel of the vehicle such that these indicator lights are to be within the peripheral vision of the driver who can easily perceive the particular indicator light being turned on without detracting his attention from the traffic scene. Accordingly, the driver can learn from the device at any driving situations in order to comform his driving habit into the one which assures efficient engine operation as well as efficient fuel consumption through the course of his travel. In addition to the indicator lights, a loudspeaker is provided for warning the driver of his driving behavior operating the engine to an unpermissible extent so as to avoid such violent driving operation.

Fig I

EP 0 083 000 A2

SPECIFICATION

DEVICE FOR INDICATING THE DRIVING OPERATION OF THE INTERNAL
COMBUSTION ENGINE OF A MOTOR VEHICLE

TECHNICAL FIELD

This invention is directed to a device for indicating the
driving operation of the internal combustion engine in a motor
vehicle, more particularly to a device for monitoring the
operative condition of the internal combustion engine and
providing a driver with the same from which the driver is
capable of learn ng an optimum driving operation so as to
improve his driving style or technique.

BACKGROUND ART

The internal combustion engine in an motor vehicle which
suffers severe load variations will require an operator or
driver to observe moderate driving manner for the purpose of
increasing the engine efficiency as well as the fuel
efficiency. However, an optimum driving manner is difficult
to be performed by the driver from the fact that there is an
infinite number of combinations of the transmission gear to be
selected and the position of the accelerator pedal to be
adjusted for travelling the vehicle at desired speeds and
moreover that the engine is subjected to a wide range of
various load conditions, i.e. starting, accelerating, cruising
and decelarating through the entire travelling. Accordingly,
such optimum driving operation which should vary depending on
the load conditions can be hardly expected without an appropriate instruction. To this end, there have been various instructive means for monitoring the engine conditions by indicating the pressure within the intake manifold on a monometer-type device. However, the reading the information from such monometer-type device sometimes causes the motor vehicle operator to divert his direct attention from the traffic scene, and therefore efficient operation of the engine throughout ever changing load conditions as well as traffic situations can be almost made impossible by careful driver whose visual attention must be directed to the traffic scene to ensure safe driving operation. Another aspects to be noted in conjunction with the above are the driving habits or styles of individual drivers, which are unfortunately revealed in almost all cases to detract from engine efficiency as well as fuel efficiency. The driver, if notified of his habit leading to the decrease in these efficiency, has no way to improve his driving style without relying upon the prior devices which require him to deconcentrate his attention to road.

DISCLOSURE OF THE INVENTION

It is an object of the present invention to remedy this drawback by means of an indicator board of unique configuration, providing the driver with sufficient information such as to improve his driving style while preventing him from diverting his direct attention to the traffic scene.

For this purpose, the device of the present invention has an indicator board which is adapted for use to be disposed on the dash pannel of a motor vehicle and comprises a plurality of indicator lights of different colors arranged in series and output means being operative in response to the degree of the pressure within the inlet duct leading to an internal combustion engine to produce an output so as to selectively turn on at least one of said indicator lights in the order corresponding to the decrease in the pressure within the inlet duct. With this arrangement, the indication about the engine condition by these indicator lights being turned on in different colors can be certainly perceived within the peripheral vision of the driver without distracting his attention from the road, keeping the driver informed about the conformity of transmission gear selection and accelerating manner of his driving style through the course of the travelling as well as teaching to vary his driving style in order to efficiently operate the engine and to save fuel.

According to another feature of the present invention, the indicator board includes a loudspeaker which issues audible sound when the degree of the pressure within the inlet duct falls below such a level as to turn on the last indicator light. Due to this arrangement, the driver can be warned by both the visible and audible indications of his driving behavior causing the undesirable engine operation such that he should not be negligent to alter his ongoing driving behavior in order to maintain the engine and fuel efficiency at high levels.

These and other objects and advantages of the present invention will become more apparent from the detailed description thereon taken with the accompanying drawings.

- 4 -

BRIEF DESCRIPTION OF THE DRAWINGS

In the drawings,

Fig. 1 is a somewhat diagrammatic plane view partly in section, schematically illustrating a device in accordance with the present invention;

Fig. 2 is a vertical sectional view illustrating the pressure detecting means and output means connected thereto of the device as shown in Fig. 1;

Fig. 3 is a partial plane view partly in section illustrating a device in accordance with another embodiment of the present invention; and

Fig. 4 is a partial side view partly in section illustrating the device as shown in Fig. 3.

MODES FOR CARRYING OUT THE INVENTION

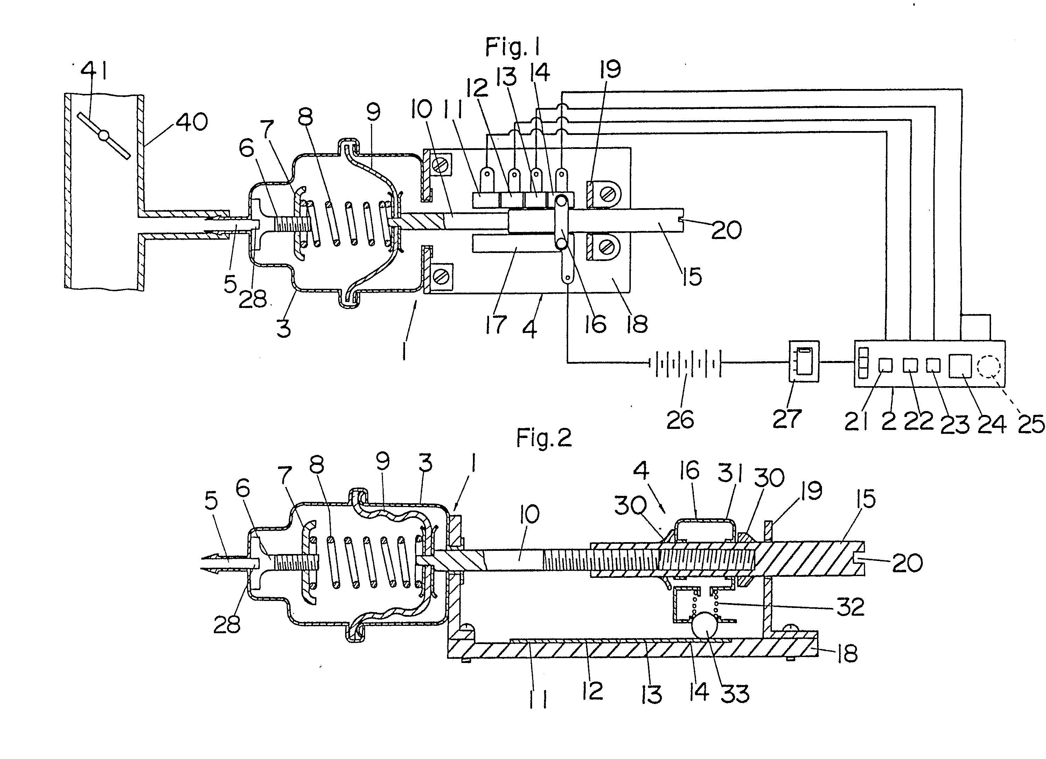

Referring now to Figs. 1 and 2, there is illustrated a device for indicating the driving condition of the internal combustion engine of a motor vehicle comprising detecting means 1 for detecting or sensing the degree of vacuum pressure within the air inlet duct 40 leading to the cylinders of the engine, an indicator board 2 having a plurality of indicator lights 21, 22, 23 and 24 and a loudspeaker 25, and output means 4 producing in response to the sensed vacuum pressure an output which actuates the indicator lights 21, 22, 23 and 24 and the loudspeaker 25. The detecting means 1 is a diaphragm-type actuator which is basically composed of a housing 3, a diaphragm 9 and a slidable rod 10 connected the diaphragm 9 at its one end and protruding from the housing 3. From the one end of the housing 3 is projected a connecting port 5 which is to be connected to the air inlet duct 40,
i.e., an intake manifold behind or downstream of the throttle
valve. The diaphragm 9 has its circumferential edge portion
secured to the wall of the housing 3 and is urged toward the
slidable rod 10 by a spring 8 interposed between the diaphragm
9 and a movable stop 7 which is slidably adjustable in a
direction parallel to the longitudinal direction of the rod 10
by means of an adjusting screw 6 threaded thereto. This
adjusting screw 6 is kept in place with its head being pressed
by the spring 8 against the end wall of the housing 3 and
causes the movable stop 7 to change its lengthwise position by
being turned by means of a screwdriver introduced through the
port 5, which enables the adjustment of the tension force
acting on the diaphragm 9. Accordingly, the displacement of
the diaphragm 9 by the effect of the vacuum pressure in the
housing 3 can be adjusted in accordance with the vacuum
developed within the intake manifold behind the throttle
valve. The head of the adjusting screw 5 is provided with a
radially extending recess 28 for communicating the housing
interior with the inlet duct to introduce the negative
pressure created by the engine within the housing 3 as well as
for receiving the bit of the screwdriver. To the opposite end
of said slidable rod 10 is threadedly connected the one end of
an adjusting rod 15 of insulating material such as nylon which
carries a movable contact 16 intermediate its ends and at the
other end of which is formed a recess 20 for receiving the bit
of a screwdriver so as to adjust the relative position of the
movable contact 16. The numeral 19 designates the support for
slidably holding the adjusting rod 15 on the base plate 18.

Along the opposite sides of the adjusting rods 15 are provided a series of four spaced apart contacts 11 to 14 and a common contact plate 17, both of which are fixed onto a base plate 18 in parallel relationship with the lengthwise direction of the rods 10 and 15. These four contacts 11 to 14 are cooperated with the common contact plate 17 and the movable contact 16 to form four parallel electic switches which constitute said output means 4. These switches are thus actuated by the longitudinal movement of the movable contact 16 in response to the degree of the vacuum within the housing 3. The above movable contact 16, as best illustrated in Fig. 2, comprises the member 31 having a pair of downwardly projecting legs at each lower end of which is provided a ball contact 33. The member 31 is supported rotatably about the longitudinal axis of the adjusting rod 15 with one leg being directed to the common contact plate 17 and the other to the contacts 11 to 14, and is held at a fixed longitudinal position along the rod 15 by means of a pair of retainer rings 30. The ball contacts 33 are pressed to the corresponding contact member by means of springs 32 such as to maintain the close contacts between the ball contacts 33 and the corresponding contact members 11 to 14 and 17 even at the time of adjusting the longitudinal position of the movable contact 16 by rotating the adjusting rod 15. While, the above indicator board 2 having thereon four indicator lights 21 to 24 and the loudspeaker 25 is adapted for use to be installed on the dash pannel of the motor vehicle in such a way as to be within the peripheral vision of the driver. These four indicator lights 21 to 24 are of different colors, in practice, blue, yellow, orange and red, and are aligned in this color order from the left to the
right, as in Fig. 1.  The first three lights 21, 22 and 23 are
respectively connected via an voltage supply 26 to the first
three switches whose contacts 11, 12 and 13 are aligned in
increasing order of the distances from the diaphragm 9.  The
last indicator light 24 is sized to have a larger viewing face
than those of the others and is connected via the same voltage
supply 26 to the last switch whose contact 14 is farmost
position from the diaphragm 9.  The loudspeaker 25 is
connected in parallel with this last indicator light 24 in
order to issue an audible signal at the same time of the last
indicator 24 being turned on.  Accordingly, the driver would
be warned by the audible signal together with the visible
singal of his driving behavior bringing serious drops in
engine efficiency as well as in fuel ecconomy.  And these
warnings to the eyes and ears  are so unnegligible as to cause
the driver to alter immediately his driving style.  The
numeral 27 designates a light controller which is interposed
between the voltage supply 26 and the indicator lights 21 to
24 to adjust the brightness of the whole lights 21 to 24.

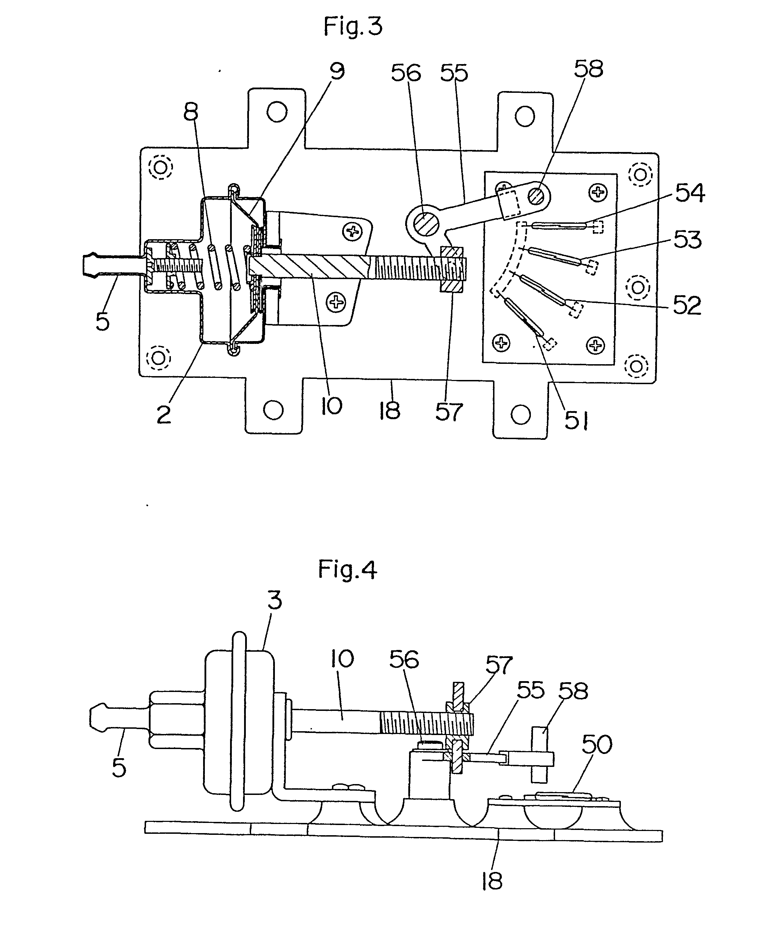

Referring now to Figs. 3 and 4, there is shown another
embodiment of the present invention in which a modification of
the switching mechanism is disclosed for the lights 21 to 24
and the loudspeaker 25 arranged in the same configuration as
in the above embodiment.  This switching mechanism includes
reed switches 51 to 54 in place of the contacts 11 to 14, 17
and 33 as in the above embodiment for the purpose of making
non-friction switching operation for the lights 21 to 24 and
the loudspealer 25.  Connected to the right-hand end of the rod 10 actuated by the diaphragm 9 is a crank arm 55 which is pivoted upon an upright axis 56 protruded onto the base base plate 18. The crank arm 55 carries at its one end an adjusting ring 57 which is threaded onto the end portion of the rod 10 so as to be slidable along the lengthwise direction of the rod 10 and it carries at its opposite end a permanent magnet 58. Thus, the reciprocating movement of the rod 10 with changing negative pressures causes the magnet 58 to move along an arcuate path around the axis 56. Onto the base plate 18 are disposed the corresponding numbers of the reed swithes 51 to 54 which actuate to close the contacts therein in response to the magnet 58 being in close proximity thereto and are arranged in a row along the like arcuate path. These reed switches positioned below the arcuate path of the magnet 58 are connected respectively via corresponding lights 21 through 24 to the voltage supply 26, and the loudspeaker 25 is connected in parallel with the last light 24. That is, the first reed switch 51 is operatively connected to the light 21 of blue color, the second switch 52 to the light 22 of yellow color, the third switch 53 to the light 23 of orange color, and the last switch 54 to the light 24 of red color and the loudspeaker, so that the ligts 21 to 24 and/or the loudspeaker 25 are turned on in this order by the increasing negative pressure levels within the housing 3. The postion of the magnet 58 relative to the switches 51 to 54 can be adjusted simply by turning and therefore sliding the adjusting ring 57 along the end portion of the rod 10.

When the vehicle travels without the accelerator pedal being pressed down or with the throttle valve being closed, such as when travels with the engine idling or with applying a so-called engine-braking, the degree of the vacuum within the intake manifold of the normal gasoline engine will be as high as more than 40 cmHg, drawing the diaphragm 9 fully to the extreme left against the urging force by the spring 8 so as to close the contacts between 11 and 17 to turn on the leftmost indicator light 21 of blue color, from which it is noted by the driver that the engine is operating at high vacuum levels.

Under low load conditions, such as the constant cruising condition when travelling flat road with proper gear selection, the degree of the vacuum will be maintained at a level of about 30 cmHg or more, keeping the same indicator light 21 of blue color being on such that the driving operation by the driver is satisfactory for efficient engine operation as well as efficient fuel consumption.

While, under certain engine conditions such as accelerating, cruising at a speed of more than 100 km/h, climbing hill or running in an unsuitable gear, the throttle valve will be opened so as to drop the vacuum to a level of less than 30 cmHg, which causes the diaphragm 9 to move to the right and therefore bring the one end of the movable contact 16 into contact relationship with the second contact 12. Thus, the connection by this movable contact 16 between the second contact 12 and the common contact plate 17 is to be established so as to turn on the second indicator light 22 of yellow color instead of the blue light 21.

Further, when the engine conditions are such that the vehicle is running in the gear far from a satisfactory position, that it is subjected to rapid acceleration or that it is climbing steep road, the degree of the vacuum will fall to a level of about 25 cmHg or less, forcing back by the spring 8 the diaphragm 9, which in turn connects the movable contact 16 with the third contact 13 so as to turn on the third indicator light 23 of orange color. Under these engine conditions, the throttle valve is opened so widely that the power jet employed in the carburetor for boosting the fuel inflow will come into operation, resulting in higher fuel consumption as well as higher engine loads, of which the driver is informed by the orange light 23 being on.

If the degree of the vacuum fall down to a level of as less as 15 cmHg such as to turn on the last indicator light 24 of red color, it suggests that the engine is subjected to overloads or that something is wrong with the air intake passage. In this case, the loudspeaker 25 together with the red light 24 comes into operation to inform or warn the driver of the above abnormal condition being occured. Accordingly, the driver will not neglect this warning appealing to both the eyes and ears so as to surely recognize this effect for taking necessary remedies.

In accordance with these operation of the device, the driver is kept informed of the engine conditions or efficiencies by the visible and/or audible signal issued from the indicator board 2 on the dash board, so that he can judge as to whether or not his ongoing driving behavior is proper, and if not proper, he can obtain the proper driving style with the help of this device. For example, when the acceleration is so rapid as to lower the engine efficiency, the indicator light 23 of orange color will turn on, from which the driver is instructed to slack the accelerator pedal until the indicator light 22 of yellow color will light. And when a lower or higher gear is selected in relation to the vehicle speed, there turn the indicator lihgt 22 of yellow color or 23 of orange color, instrcuting the driver to change to a proper gear in such a way as to turn on the light 21 of blue color or 22 of yellow color. As in these manner, the driver can be readily instructed by the changing colors of the indicator lights of the timing of his changing the gear as well as of his ajusting the acceleration pedal or the throttle valve. Thus, the repeated driving operation by the driver in accordance with the instruction of the present device can certainly improve or vary his driving style so as to effect an optimum engine operation and reduced fuel consumption. That is, maintaining the indicator light 21 of blue color or 22 of yellow color being on through his travel will bring about the efficiency engine operation, which results in lower fuel consumption as well as reduced maintenance costs due to the less engine fatigue. Further, if the indicator lights 22, 23 or 24 other than the light 21 of blue color be on instead of the latter at the time that the engine is idling without the choke being in operation, the driver can immediately recognize by the indicator lights that the engine or carburetor is out of order. Accordingly, the present device can inform the driver of any faults in the engine or carburetor together with the engine efficiency so as to enable him to take prompt remedies.

In the above enbodiments, only the description was made for the present device when it is adapted to the gasoline engine.  It should be noted that the present device may be adapted to engines of other types including a diesel engine and a propane gas engine, where the vacuum or negative pressure levels may differ from that of the gasoline engine so that is  required to adjust the longitudinal position of the movable contact by said adjusting screw 6 or by replacing the spring 8 acting to urging the diaphram 9 with another one.  It is still possible to adapt the present device to the engine having a supercharger, in this case the detecting means should be so constructed as to detect the positive pressure instead of the negative one by the use of a piezoelectric transducer and the like.

What is claimed is:

1. A device for indicating the driving operation of the internal combustion engine in a motor vehicle having an air inlet duct comprising

(a) pressure detecting means which is adapted to be connected to the air inlet duct of the engine for detecting the degree of the pressure within the inlet duct;

(b) an indicator board which is adapted in use to be disposed on the dash pannel of a motor vehicle and comprises a plurality of indicator lights of different colors arranged in series thereon; and

(c) output means being operative in response to the degree of the pressure detected by said detecting means to produce outputs so as to selectively turn on at least one of said indicator lights in the order corresponding to the decrease in the pressure within the duct.

2. The device as set forth in claim 1, wherein said indicator board includes a loudspeaker which issues audible sound when the degree of the pressure within the inlet duct falls below such a level as to turn the last indicator light.

Fig. I

Fig.2

Fig.3

Fig.4